# EUROPEAN PATENT SPECIFICATION

(11) **EP 2 689 940 B1**
(45) Date of publication and mention of the grant of the patent: **02.11.2016**
(21) Application number: 12760793.5
(22) Date of filing: 16.03.2012
(51) Int. Cl.: B60C 11/11, B60C 11/12, B60C 11/03

(54) **PNEUMATIC TIRE**
LUFTREIFEN
PNEUMATIQUE

(30) Priority: 23.03.2011 JP 2011063979
(43) Date of publication of application: 29.01.2014
(73) Proprietor: Bridgestone Corporation, Tokyo 104-8340 (JP)
(72) Inventor: OCHI, Naoya, Kodaira-shi, Tokyo 187-8531 (JP)
(74) Representative: Oxley, Robin John George
(86) International application number: PCT/JP2012/001860
(87) International publication number: WO 2012/127839

(56) References cited:
- JP-A- 6 143 935
- JP-A- H06 143 935
- US-S- D 388 752

## Description

### TECHNICAL FIELD

The present invention relates to pneumatic tires, and in particular to pneumatic tires with improved cornering performance on snow, without impairing traction performance and braking performance on snow.

### BACKGROUND ART

Conventionally, in order to improve on-snow performance of tires having a tread with a tread surface, at least one circumferential main groove extending circumferentially around the tread, and multiple lateral grooves extending at an angle to a tread width direction, in which the tread surface is partitioned into multiple blocks by the circumferential main groove and the lateral grooves, some pneumatic tires have been proposed that ensure on-snow performance by providing zigzag circumferential main grooves to increase the number of edges of each block, as disclosed in, e.g., JP 2008-201319 A (PTL 1).

In this way, substantially rectangular-shaped blocks can be formed by longitudinal grooves and lateral grooves to increase the number of edges, and thus create more edge components of each block, thereby ensuring traction performance and braking performance on snow. In addition, the number of edges of each block can be increased by providing zigzag circumferential main grooves to improve steering stability during cornering (cornering performance).

As disclosed in JP 8-067114 A (PTL 2), such a pneumatic tire has also been proposed that has a tread, a pair of circumferential grooves dividing the tread into several sections, a middle section and both end sections, and a large number of inclined grooves spaced apart from one another in the circumferential direction in the middle section, in which the inclined grooves are composed of low-inclination grooves having a smaller inclination angle of 20° to 30° with respect to the circumferential direction and high-inclination grooves having a larger inclination angle of 75° to 85° with respect to the circumferential direction, and are disposed so that the low-inclination grooves and the high-inclination grooves are inclined in opposite directions with respect to the circumferential direction.
With this tire, edge components of the low-inclination grooves and the high-inclination grooves in the circumferential direction of the tire may bring a further improvement in edge effect in the lateral direction of the tire, or lateral gripping force of the tire, and the high-inclination grooves and the low-inclination grooves may be disposed so that the inclination direction of the high-inclination grooves is opposed to that of the low-inclination grooves with respect to the circumferential direction, thereby ensuring straight running stability of vehicles and partial wear resistance of tires.

### CITATION LIST

### Patent Literature

PTL 1: JP 2008-201319 A
PTL 2: JP 8-067114 A

Reference is also made to JP 6-143935, which discloses a pneumatic tire according to the preamble of Claim 1 and also to US Design Patent 388752.

### SUMMARY OF INVENTION

### (Technical Problem)

There is still a need, however, for a tire with further improved braking performance, traction performance and cornering performance on snow.

Therefore, an object of the present invention is to propose means for balancing high levels of on-snow traction performance, on-snow braking performance and on-snow cornering performance.

### (Solution to Problem)

That is, the primary features of the present invention are as follows.
(1) A pneumatic tire comprising: a tread having a tread surface; at least one circumferential main groove extending circumferentially around the tread; and a plurality of lateral grooves extending at an angle to a tread width direction, the tread surface being partitioned into a plurality of blocks by the circumferential main groove and the lateral grooves, each of the blocks being provided with one or more sipes,
   wherein the pneumatic tire comprises a plurality of reversely inclined lateral grooves, each extending, across at least two blocks, in a direction opposite to the inclination direction of the lateral grooves with respect to the tread width direction,
   wherein each of the reversely inclined lateral grooves has both ends terminated inside the blocks, and wherein each of the reversely inclined lateral grooves has bent portions in blocks such that an inclination angle with respect to the tread width direction of those portions of the reversely inclined lateral groove that extend from the bent portions to the ends is smaller than an inclination angle with respect to the tread width direction of a middle portion of the reversely inclined lateral groove.
   As used herein, "tread surface" means the outer circumferential surface of a tire around the whole circumference thereof that comes in contact with the road surface when the tire mounted on a standard rim, the size of which is as specified by the industry standards in effect in the location in which the tire is made or used---in the United States, as specified in "*Year Book*" published by the Tire and Rim Association, in Europe, "*Standards Manual*" published by the European Tyre and Rim Technical Organisation; and in Japan, "*JATMA Year Book*" published by the Japan Automobile Tire Manufacturer's Association---is rotated under the maximum load (maximum load-bearing capacity) and air pressure corresponding to the maximum load for a single tire sized as specified in the standards.
(2) The pneumatic tire according to (1), wherein the center in the tread width direction of each of the reversely inclined lateral grooves is located on a circumferential line through the center in the tread width direction of each block in which the reversely inclined lateral groove is provided.
   As used herein, the inclination angle of the reversely inclined lateral groove with respect to the tread width direction means the acute angle between the tread width direction and the reversely inclined lateral groove. The same applies to the inclination angle of the lateral grooves with respect to the tread width direction, which will be discussed below.
(3) The pneumatic tire according to (1) or (2), wherein the inclination angle of the middle portion of the reversely inclined lateral groove with respect to the tread width direction is in the range of 30° to 70°.
(4) The pneumatic tire according to any one of (1) to (3), wherein an inclination angle of each of the lateral grooves with respect to the tread width direction is smaller in tread shoulder regions than in a tread middle region.
(5) The pneumatic tire according to any one of (1) to (4), wherein two circumferential main grooves are provided in the tread surface.
(6) The pneumatic tire according to any one of (1) to (5), wherein each of the reversely inclined lateral grooves has bent portions in blocks such that a groove width of those portions of the reversely inclined lateral groove that extend from the bent portions to the ends is smaller than a groove width of a middle portion of the reversely inclined lateral groove.

### (Advantageous Effect of Invention)

The present invention may provide a pneumatic tire balancing high levels of on-snow traction performance, on-snow braking performance and on-snow cornering performance.

### BRIEF DESCRIPTION OF THE DRAWING

FIG. 1 illustrates a partial exploded view of a tread surface in an example of a pneumatic tire according to the present invention.
FIG. 2 is an enlarged view of some of the reversely inclined lateral grooves shown in FIG. 1.
FIG. 3 illustrates a partial exploded view of a tread surface in another example of the pneumatic tire according to the present invention.
FIG. 4 illustrates a tire according to a comparative example.
FIG. 5 illustrates a tire according to another comparative example.

### DESCRIPTION OF EMBODIMENTS

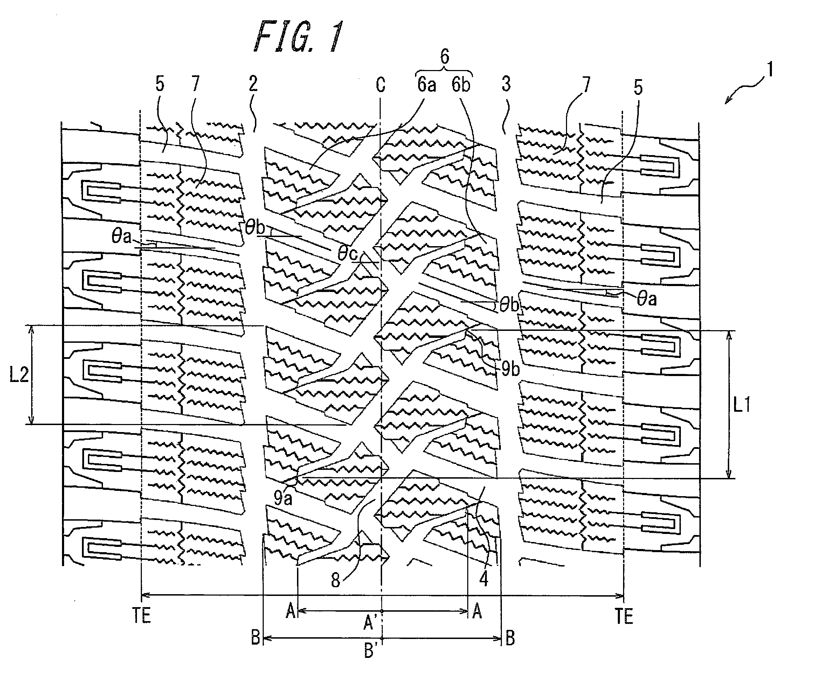

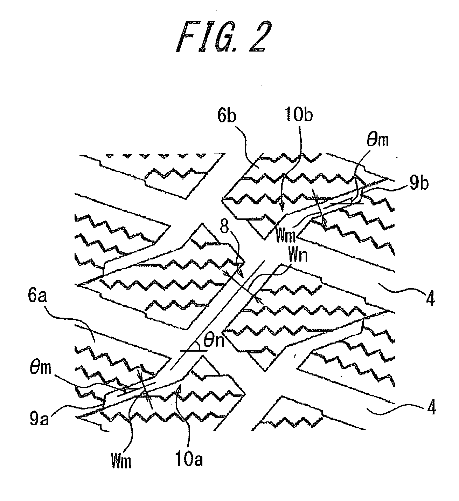

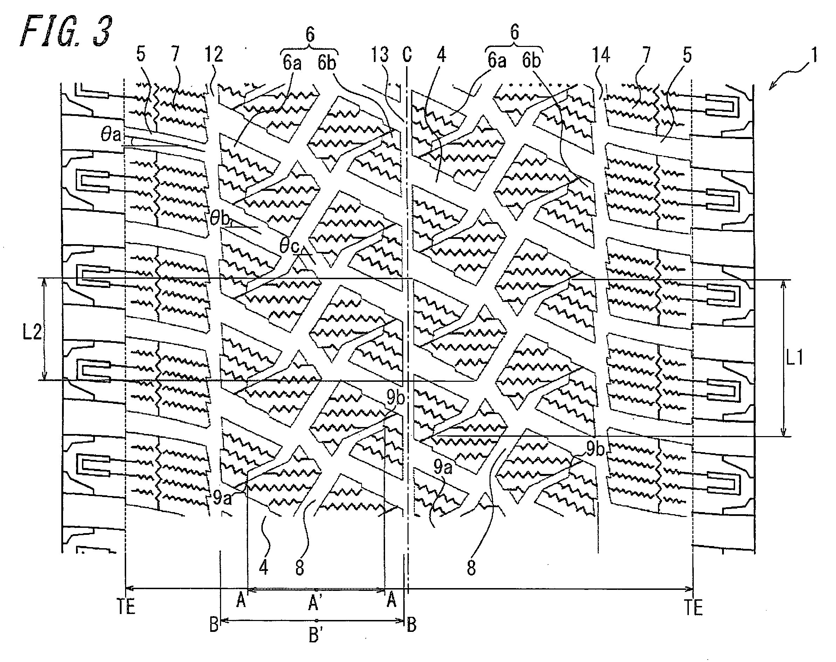

A pneumatic tire according to the present invention will now be described in detail below with reference to the accompanying drawing. FIG. 1 illustrates a partial exploded view of a tread surface in an example of a pneumatic tire according to the present invention. FIG. 2 is an enlarged view of some of the reversely inclined lateral grooves shown in FIG. 1. FIG. 3 illustrates a partial exploded view of a tread surface in another example of the pneumatic tire according to the present invention.

FIG. 1 is a partial exploded view of a tread surface 1 of a pneumatic tire according to the present invention (which will be hereinafter referred to simply as "tire").
At least one, in this case two circumferential main grooves 2 and 3 are provided on the tread surface 1. The circumferential main grooves extend circumferentially around the tread. This configuration forms a land portion on one tread shoulder side that extends from one tread end TE to a circumferential main groove 2, a land portion on the other tread shoulder side that extends from the other tread end TE to a circumferential main groove 3, and a land portion on the tread middle side that extends between the circumferential main grooves 2 and 3.
Further, a plurality of lateral grooves 4 that extend at an angle, e.g., smaller than 45°, to a tread width direction (a direction orthogonal to the tire equator) from the circumferential main groove 2 to the circumferential main groove 3 are formed at predetermined intervals in the circumferential direction of the tire to partition the land portion on the tread middle side into a plurality of blocks 6. In addition, a plurality of lateral grooves 5, 5 that extend in the tread width direction from the circumferential main groove 2 to one tread end TE and from the circumferential main groove 3 to the other tread end TE, respectively, are provided at predetermined intervals in the circumferential direction of the tire to partition the land portions on the tread shoulder sides into a plurality of blocks 7, 7, respectively.

The blocks 6 and 7 are provided with one or more sipes. The sipes thus formed will be open as the blocks are brought into contact with the snow road surface, and traction performance and braking performance on snow may be improved by the effect of blocks scratching the snow road surface (edge effect) and the increased friction between the blocks and the snow road surface. In addition, during driving on the wet road, or when the snow melts and turns into water due to the above-described friction between the blocks and the snow road surface, the opened sipes may trap and drain the water into the circumferential main grooves 2, 3, lateral grooves 4, 5 and reversely inclined lateral grooves 8, as described later, all being capable of communicating with these sipes, resulting in enhanced water drainage effect. This configuration also results in a moderate reduction in rigidity of each block, providing good grounding performance of each block and thereby effectively improving steering stability.

As illustrated in FIG. 1, provided on the land portion on the tread middle side are inclined grooves (hereinafter, "reversely inclined lateral grooves 8") that extend across at least two, in this case three blocks 6 in a direction opposite to the inclination direction of the lateral grooves 4 with respect to the tread width direction. In the example illustrated in FIG. 1, each block 6 is divided into two sub-blocks, in this case blocks 6a and 6b, by a reversely inclined lateral groove 8.

In this embodiment, the lateral grooves 4 traversing the tread surface on the tread middle side in the tread width direction are inclined with respect to the tread width direction, and therefore, edge components, particularly those in the tire width direction may effectively ensure on-snow handling performance during cornering.
However, since the lateral grooves 4 are inclined in a fixed direction with respect to the tread width direction as described above, when a vehicle with the tires according to the present invention drives on a low µ road such as a snow road, particularly, when the vehicle turns in the inclination direction of the lateral grooves 4, the tires tend to be slippery on the road, and a situation may arise where the vehicle skids in the inclination direction (so-called "skew"). Accordingly, the reversely inclined lateral grooves 8 that are inclined in a direction opposite to the inclination direction of the lateral grooves 4 may be provided to inhibit the tires from skidding in the inclination direction of the lateral grooves 4, and thus prevent the occurrence of skew of the tires on snow regardless of whichever direction the vehicle turns, thereby ensuring good handling performance.

During straight running of the vehicle, the reversely inclined lateral grooves 8 also effectively work on traction performance and braking performance. In addition, the reversely inclined lateral grooves 8 also have beneficial effects on handling performance during cornering due to their edge components opposing those of the lateral grooves 4.

While each reversely inclined lateral groove 8 is shown to be arranged across three blocks in the example of FIG. 1, each reversely inclined lateral groove 8 may also be arranged across two blocks, for example, as long as it has length L1 in the circumferential direction of the tread that is larger than length L2 of each of the sub-blocks 6a and 6b in the circumferential direction of the tread.

The reason is that each reversely inclined lateral groove 8 of this length may have the aforementioned effects successfully.

Further, it is important for each reversely inclined lateral groove 8 to have both ends 9a and 9b terminated inside the corresponding blocks 6a and 6b. This means that each reversely inclined lateral groove 8 is shaped like a bag with both ends closed. With this configuration, when snow is caught in a reversely inclined lateral groove 8, the snow may be compressed in the groove and there will be increased resistance, i.e., high shear force of snow in void, which makes it possible to improve on-snow traction performance and on-snow braking performance. More specifically, if only one end of each reversely inclined lateral groove 8 is terminated inside one block, the other end of the groove runs off the edge of the other block and the snow caught in the groove will be pushed out of the block, whereas in the present invention both ends of each reversely inclined lateral groove 8 are terminated inside the blocks to provide a bag-like groove, which allows firmly treading down any snow caught in this bag-like groove, resulting in higher shear force of snow in void. The resulting configuration may achieve on-snow traction performance and on-snow braking performance at a higher level.
In addition, the arrangement of each reversely inclined lateral groove 8 with both ends terminated inside the blocks 6 may produce the same effect in rotation in both directions independently of the rotational direction of the tires.
Further, since the blocks 6a and 6b are not divided by the ends 9a and 9b, the rigidity of the blocks 6a and 6b may be ensured. Accordingly, enhancing the grounding performance of each block may lead to even better traction performance, braking performance and cornering performance.

The center in the tread width direction of each reversely inclined lateral groove 8 is preferably located on a circumferential line through the center in the tread width direction of each block 6 in which the reversely inclined lateral groove 8 is provided. As used herein, "the center in the tread width direction of each reversely inclined lateral groove 8" represents, as illustrated in FIG. 1, the midpoint A' of a line segment A-A of a length corresponding to the length, obtained by being projected in the circumferential direction of the tread, of a reversely inclined lateral groove 8. The same applies to the center in the tread width direction of each lateral groove 4, which will be described later. In addition, the circumferential line through the center in the tread width direction of each block 6 represents, as illustrated in FIG. 1, a circumferential line that passes through the midpoint B' of a line segment B-B of a length corresponding to the length, obtained by being projected in the circumferential direction of the tread, of a block 6 in which a reversely inclined lateral groove 8 is formed, and that runs parallel to the tire equator C.
As described above, each reversely inclined lateral groove 8 comprises a groove that is inclined in a direction opposite to the inclination direction of each lateral groove 4 with respect to the tread width direction, and may prevent the vehicle from skidding in one inclination direction while it turns, inhibiting the occurrence of skew. Accordingly, the positioning of each reversely inclined lateral groove 8 on the circumferential line of the tread through the center in the tread width direction of each lateral groove 4 allows both the lateral grooves 4 inclined with respect to the tread width direction and the reversely inclined lateral grooves 8 inclined with respect to the tread width direction to work successively to further inhibit the occurrence of skew in a more effective way. Additionally, the aforementioned effects may be accomplished in the most effective manner when the center in the tread width direction of each reversely inclined lateral groove 8 is positioned on the circumferential line of the tread through the center in the tread width direction of each lateral groove 4, i.e., the center in the tread width direction of each block 6. While all of the blocks 6 are shown to have the same length in the width direction in FIG. 1, different blocks 6 may have different lengths in the tread width direction, or the blocks 6 may be arranged in the circumferential direction with deviation in the tread width direction.
In this case, the circumferential line through the center in the tread width direction of each block 6 indicates a circumferential line that passes through the midpoint of a line segment of a length corresponding to the length, obtained by being projected in the circumferential direction, of one of the multiple blocks 6 across which one reversely inclined lateral groove 8 runs that is occupied by the groove 8 with the largest area ratio.

FIG. 2 is an enlarged view of some of the reversely inclined lateral grooves 8 shown in FIG. 1. Each reversely inclined lateral groove 8 has, as illustrated in FIG. 2, bent portions 10a and 10b in blocks 6a and 6b, respectively, and involves varying inclination angles with respect to the tread width direction. Additionally, an inclination angle θₘ, θₘ with respect to the tread width direction of those portions of the reversely inclined lateral groove 8 that extend from the bent portion 10a to the end 9a and from the bent portion 10b to the end 9b, respectively, are preferably smaller than an inclination angle θₙ with respect to the tread width direction of a middle portion, i.e., a portion between the bent portions 10a and 10b of the reversely inclined lateral groove 8.
In this way, the reversely inclined lateral groove 8 may be bent inside the blocks 6a and 6b so that the inclination angle θₘ near the ends 9a and 9b is smaller than the inclination angle θₙ between the bent portions 10a and 10b, thereby allowing firmly treading down any snow caught in a bag-like reversely inclined lateral groove 8 to obtain higher shear force of snow in void, and thus improving on-snow traction performance and on-snow braking performance.

In addition, a groove width Wm, Wm of those portions of the reversely inclined lateral groove 8 that extend from the bent portion 10a to the end 9a and from the bent portion 10b to the end 9b, respectively, is preferably smaller than a groove width Wn of the middle portion, i.e., the portion between the bent portions 10a and 10b of the reversely inclined lateral groove 8.
Since the portion extending from the bent portion 10a to the end 9a is formed in the block 6a and the portion extending from the bent portion 10b to the end 9b is formed in the block 6b, as these portions have a smaller groove width, correspondingly larger block areas may be left. This may maintain an adequate length of the reversely inclined lateral grooves without impairing the rigidity of the blocks.

The inclination angles of the lateral grooves 4, 5 and of the reversely inclined lateral grooves 8 will now be described below.
Lateral grooves 5, 5 in both tread shoulder regions preferably have an inclination angle with respect to the tread width direction smaller than that of lateral grooves 4 in a tread middle region. Specifically, as illustrated in FIG. 1, it is preferred that the lateral grooves 5 located in the tread shoulder regions have an inclination angle θₐ with respect to the tread width direction that is smaller than an inclination angle θ_{b} with respect to the tread width direction of the lateral grooves 4 located in the tread middle region.
As used herein, "tread shoulder region" refers to, where two or more circumferential main grooves are provided, a region that extends from the circumferential main grooves positioned on the outermost side of the tread to the respective tread ends (the opposite ends of the tread surface in the tread width direction), in the case of FIG. 1, one region extending from the circumferential main groove 2 to one tread end TE and the other region extending from the circumferential main groove 3 to the other tread end TE. "Tread middle region" refers to a region between two circumferential main grooves on the outermost side of the tread, in the case of FIG. 1, a region between the circumferential main groove 2 and the circumferential main groove 3.

In this way, the inclination angle with respect to the tread width direction of the lateral grooves 5 in the tread shoulder region may be made small to allow the force exerted from the road surface against the tire in rotation to be uniformly distributed in the width direction of the blocks, thereby reducing partial wear of the blocks on the shoulder side.
In addition, during rotation of the tire, the blocks in the tread shoulder regions tend to contribute to braking performance, while those in the tread middle region to handling performance. Accordingly, as described above, the lateral grooves 5 in the tread shoulder regions may be arranged to have a relatively small inclination angle θₐ with respect to the tread width direction so that the walls of the lateral grooves related to the blocks in the tread shoulder regions are substantially orthogonal to the circumferential direction of the tread, thereby enhancing braking performance. On the other hand, the lateral grooves 4 in the tread middle region may be arranged to have a relatively large inclination angle, resulting in improved handling performance.

It should be noted that the inclination angle of lateral grooves 4 needs not be constant within the region between the circumferential main grooves 2 and 3, and may also be designed to gradually increase from the tread ends toward the tread middle region. Specifically, as is the case with the example of FIG. 1, the lateral grooves 4 may have an inclination angle θ_{c} in the middle of the tread (on the tire equator C) that is larger than an inclination angle θ_{b} at positions closer to the tread ends.

On the other hand, each reversely inclined lateral groove 8 preferably has an inclination angle θₙ in the range of 30° to 70° with respect to the tread width direction. The reason is that an inclination angle θₙ with respect to the tread width direction of 30° or more may effectively mitigate the occurrence of skew, and 70° or less may effectively ensure traction performance and braking performance.
For example, as illustrated in FIG. 1, in the case of a radial tire for automobiles with such a tread pattern that involves regions, each including one or more (in FIG. 1, three) blocks across which one reversely inclined lateral groove 8 runs and having substantially equal lengths in the circumferential direction and in the width direction, each reversely inclined lateral groove 8 may have an inclination angle θₙ of 40° to 60° with respect to the tread width direction, as well as an inclination angle θₘ of 10° to 30° with respect to the tread width direction in each portion extending from one bent portion 10a (10b) to one end 9a (9b) of the groove 8. In this case, even if each reversely inclined lateral groove 8 is arranged to extend over a sufficient length for making each reversely inclined lateral groove 8 work effectively, it is still possible to leave a sufficient distance between the end 9a (9b) of the reversely inclined lateral groove 8 and the walls of the corresponding block 6a (6b), thereby ensuring the rigidity and crack resistance of the block 6a (6b).
It should be noted that the inclination angle θₙ with respect to the tread width direction of each reversely inclined lateral groove 8 is preferably larger than the inclination angle θ_{b} with respect to the tread width direction of each lateral groove 4.
Each reversely inclined lateral groove 8 has a length in the tread width direction that is, as the groove 8 is formed inside a block located in the middle of the tread, smaller than the length in the tread width direction of a lateral groove 4 that extends entirely across that block in the tread width direction. Accordingly, the occurrence of skew may be effectively reduced by setting the inclination angle θₙ with respect to the tread width direction of the reversely inclined lateral grooves 8 to be larger than the inclination angle θ_{b} with respect to the tread width direction of the lateral grooves 4, thereby allowing the lateral grooves 4 and the reversely inclined lateral grooves 8 inclined in a direction opposite to the lateral grooves 4 with respect to the tread width direction to work in a balanced manner.

Additionally, while the blocks are defined in FIG. 1 with the lateral grooves 4 and the lateral grooves 5 arranged in a staggered relationship in the circumferential direction of the tread such that a block 6 and a block 7 that are adjacent to each other in the tread width direction across the circumferential main grooves 2 and 3 are different in phase, the lateral grooves 4 and the lateral grooves 5 may be arranged in a linear manner.
Moreover, while the circumferential main groove 2 and the circumferential main groove 3 are formed in a substantially linear manner in FIG. 1, these grooves may be any grooves including curved grooves as long as they run circumferentially around the tread.

In addition, while the tread has two circumferential main grooves in FIG. 1, it may also have three or more circumferential main grooves. The tread with multiple circumferential main grooves may have higher straight running stability, as well as enhanced anti-hydroplaning performance and on-snow lateral skid prevention capability.

FIG. 3 will now be described below, illustrating a partial exploded view of a tread surface in another example of the pneumatic tire according to the present invention. In FIG. 3, the same or like reference numerals are used to denote the same or like parts in FIG. 1.
The example of FIG. 3 is different from the example of FIG. 1 described earlier in that three circumferential main grooves (in FIG. 3, circumferential main grooves 12, 13, 14) are provided on the tread surface 1. This configuration forms a land portion on one tread shoulder side that extends from one tread end TE to a circumferential main groove 12, a land portion on the other tread shoulder side that extends from the other tread end TE to a circumferential main groove 14, a first land portion on the tread middle side that extends between the circumferential main grooves 12 and 13, and a second land portion on the tread middle side between the circumferential main grooves 13 and 14.
Further, a plurality of lateral grooves 4 extending from the circumferential main groove 12 to the circumferential main groove 13 are provided in the first land portion on the tread middle side, and a plurality of lateral grooves 4 extending from the circumferential main groove 13 to the circumferential main groove 14 are provided in the second land portion on the tread middle side. The lateral grooves are provided at predetermined intervals in the circumferential direction of the tire. The first and second land portions on the tread middle side are partitioned into a plurality of blocks 6, 6, respectively.

Additionally, provided on the first and second land portions on the tread middle side are reversely inclined lateral grooves 8, as described in FIG. 1, each extending across at least two, in this case three blocks 6 and inclined in a direction opposite to the inclination direction of the lateral grooves 4 with respect to the tread width direction.
In this way, several rows of reversely inclined lateral grooves 8 may also be arranged in the tread width direction by increasing the number of circumferential main grooves, where the corresponding components have the same structure and effects as mentioned earlier with reference to FIG. 1.

While above has been described the tread having two or three circumferential main grooves, the tread may also have one or four or more circumferential main grooves.

### EXAMPLES

Tires as an example of the present invention and as comparative examples were fabricated to obtain prototypes, which were evaluated for on-snow performance.

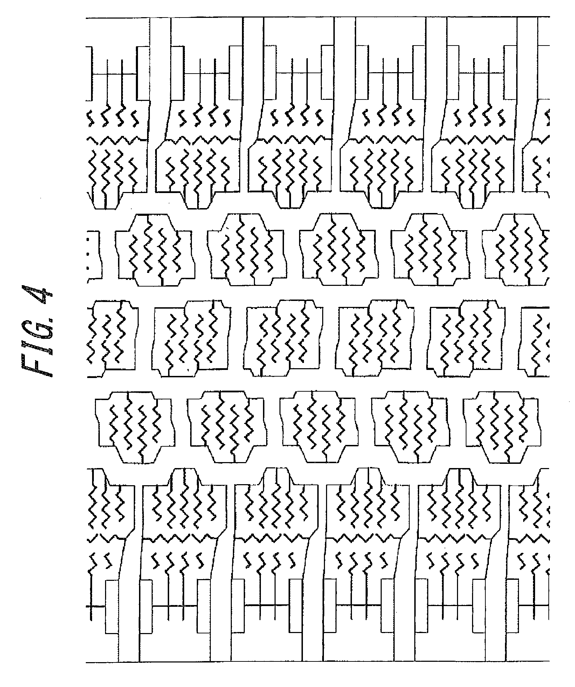

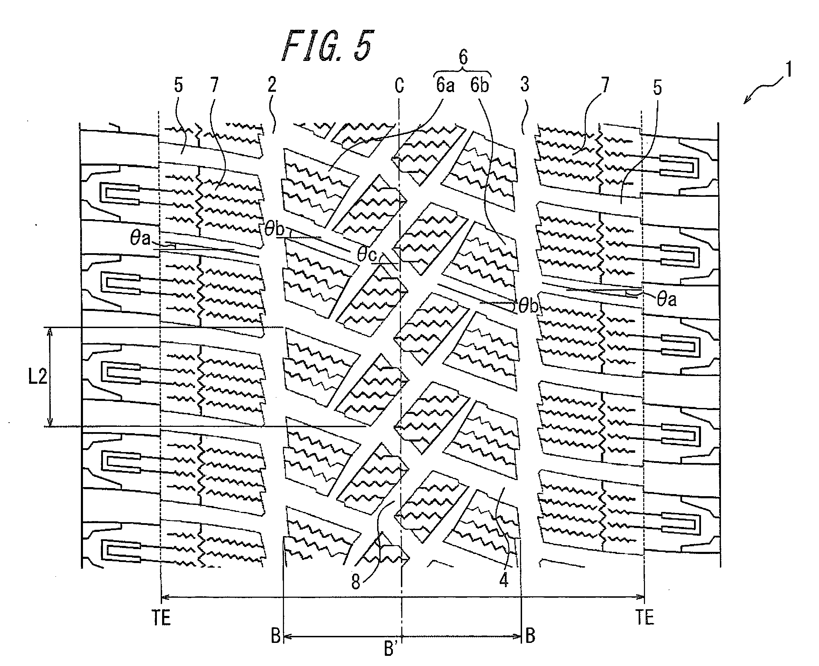

A tire of Example of the present invention was a radial tire for automobiles having a tread pattern with a size of 235/65R16 as illustrated in FIG. 1, as well as an inclination angle θₘ of 20° of those portions of each reversely inclined lateral groove that extend from the bent portions to the ends of the groove and an inclination angle θₙ of 50° in the middle portion of the tread. It should be noted that the lateral grooves and the reversely inclined lateral groove are inclined in opposite directions with respect to the tread width direction.
On the other hand, a tire of Comparative Example 1 is a radial tire for automobiles having a tread pattern as illustrated in FIG. 4, in which lateral grooves are parallel to the tread width direction and four circumferential main grooves are provided, but no reversely inclined lateral grooves are provided. In addition, a tire of Comparative Example 2 is a radial tire for automobiles having a tread pattern as illustrated in FIG. 5, in which reversely inclined lateral grooves are in communication with lateral grooves, without being terminated inside blocks. Otherwise, the tires of Comparative Examples 1 and 2 were constructed in the same way as the tire of Example.
Table 1 shows specifications of the tires.

**[Table 1]**

| | | Tire of Example 1 | Tire of Comparative Example 1 | Tire of Comparative Example 2 |
|---|---|---|---|---|
| Negative Ratio | | 37% | 32.6% | 37% |
| Reference Pitch Length | | 32.37 mm | 32.37 mm | 32.37 mm |
| Inclination angle of lateral groove | Inclination angle θₐ in tread shoulder region | 8° | 0° | 8° |
| | Inclination angle θ_{b} in tread middle region | 20° | | 20° |
| Groove width of lateral groove | Groove width in tread shoulder region | 7.0 mm | 3.5 mm | 7.0 mm |
| | Groove width in tread middle region | 9.5 mm | 8.0 mm | 9.5 mm |
| Inclination angle of reversely inclined lateral groove | Inclination angle θₘ from bent portion to end | 20° | | 20° |
| | Inclination Angle θₙ in middle portion | 50° | | 50° |
| Groove width of reversely inclined lateral groove | Groove width Wₘ from bent portion to end | 3.5 mm | - | 3.5 mm |
| | Groove width Wₙ in middle portion | 7.0 mm | | 7.0 mm |
| Position of reversely inclined lateral groove | | The center in the tread width direction of each reversely inclined lateral groove is located on a circumferential line through the center in the tread width direction of each block. | | The center in the tread width direction of each reversely inclined lateral groove is located on a circumferential line through the center in the tread width direction of each block. |

These tires of Example and Comparative Examples were mounted on a vehicle, respectively, and subjected to performance assessment of on-snow braking, on-snow traction, on-snow handling and on-snow cornering performance. The results thereof are shown in Table 2.

**[Table 2]**

| | Tire of Example | Tire of Comparative Example 1 | Tire of Comparative Example 2 |
|---|---|---|---|
| On-snow braking performance | 110 | 100 | 103 |
| On-snow traction performance | 115 | 100 | 105 |
| On-snow handling performance | 113 | 100 | 103 |
| On-snow cornering performance | 107 | 100 | 98 |

The results are shown in Table 2 as being indexed with a score of 100 representing the result of the tire of Comparative Example 1, where on-snow braking is indicated by the index of measurements of braking distance at full braking from the initial braking speed of 40 km/h in a test course with hard packed snow on the road, on-snow traction by the index of measurements of sectional time at acceleration from the initial speed of 10 km/h to 45 km/h in a test course with hard packed snow on the road, on-snow handling by the comprehensive evaluation index of braking performance and starting performance in a test course on a snow covered road, and furthermore, on-snow cornering by the index of test driver's feeling evaluation for limit performance during cornering in a test course on a snow covered road. The larger values in Table 2 are indicative of better performance.

It can be seen from the results shown in Table 2 that the tire of Example of the present invention with a tread having lateral grooves extending at an angle to the tread width direction and reversely inclined lateral grooves inclined in a direction opposite to the inclination direction of the lateral grooves with respect to the tread width direction provides superior on-snow breaking performance, on-snow traction performance, on-snow handling performance and on-snow cornering performance in comparison to the tire of Comparative Example 1, where only lateral grooves extending parallel to the tread width direction are provided, and to the tire of Comparative Example 2, where reversely inclined lateral grooves are not terminated inside blocks

### INDUSTRIAL APPLICABILITY

The present invention may provide a pneumatic tire balancing high levels of on-snow traction performance, on-snow braking performance and on-snow cornering performance.

### REFERENCE SIGNS LIST

- 1: Tread surface

- 2,3: Circumferential main groove
- 4, 5: Lateral groove
- 6, 7: Block
- 8: Reversely inclined lateral groove
- 9a, 9b: End
- 10a, 10b: Bent portion
- 12, 13, 14: Circumferential main groove

## Claims

1. A pneumatic tire comprising: a tread having a tread surface (1); at least one circumferential main groove (2,3) extending circumferentially around the tread; and a plurality of lateral grooves (4) extending at an angle to a tread width direction, the tread surface (1) being partitioned into a plurality of blocks (6,7) by the circumferential main groove (2,3) and the lateral grooves (4), each of the blocks (6,7) being provided with one or more sipes,
wherein the pneumatic tire comprises a plurality of reversely inclined lateral grooves (8), each extending, across at least two blocks (6), in a direction opposite to the inclination direction of the lateral grooves (4) with respect to the tread width direction, and
wherein each of the reversely inclined lateral grooves (8) has both ends (9a, 9b) terminated inside the blocks (6),
**characterised in that** each of the reversely inclined lateral grooves (8) has bent portions (10a, 10b) in blocks (6) such that an inclination angle with respect to the tread width direction of those portions of the reversely inclined lateral groove (8) that extend from the bent portions (10a, 10b) to the ends (9a, 9b) is smaller than an inclination angle with respect to the tread width direction of a middle portion of the reversely inclined lateral groove (8).

2. The pneumatic tire according to claim 1, wherein the center in the tread width direction of each of the reversely inclined lateral grooves (8) is located on a circumferential line through the center in the tread width direction of each block (6) in which the reversely inclined lateral groove (8) is provided.

3. The pneumatic tire according to claim 1 or 2, wherein the inclination angle of the middle portion of the reversely inclined lateral groove (8) with respect to the tread width direction is in the range of 30° to 70°.

4. The pneumatic tire according to any one of claims 1 to 3, wherein an inclination angle of each of the lateral grooves (4) with respect to the tread width direction is smaller in tread shoulder regions than in a tread middle region.

5. The pneumatic tire according to any one of claims 1 to 4, wherein two circumferential main grooves (2,3) are provided in the tread surface (1).

6. The pneumatic tire according to any one of claims 1 to 5, wherein each of the reversely inclined lateral grooves (8) has bent portions (10a, 10b) in blocks (6) such that a groove width of those portions of the reversely inclined lateral groove (8) that extend from the bent portions (10a, 10b) to the ends (9a, 9b) is smaller than a groove width of a middle portion of the reversely inclined lateral groove (8).

## Patentansprüche

1. Luftreifen, umfassend: eine Lauffläche aufweisend eine Oberfläche (1) der Lauffläche; zumindest eine Umfangshauptrille (2, 3), welche sich umfangsseitig um die Lauffläche erstreckt; und eine Mehrzahl von Seitenrillen (4), welche sich in einem Winkel zu einer Laufflächenbreitenrichtung erstrecken, wobei die Oberfläche (1) der Lauffläche in eine Mehrzahl von Blöcken (6, 7) durch die Umfangshauptrille (2, 3) und die Seitenrillen (4) aufgeteilt ist, wobei jeder der Blöcke (6, 7) mit einer oder mehreren Lamellen ausgebildet ist,
wobei der Luftreifen eine Mehrzahl von umgekehrt geneigten Seitenrillen (8) umfasst, welche sich jeweils über zumindest zwei Blöcke (6) in einer der Neigungsrichtung der Seitenrillen (4) entgegengesetzten Richtung relativ zur Laufflächenbreitenrichtung erstrecken, und
wobei beide Enden (9a, 9b) jeder der umgekehrt geneigten Seitenrillen (8) innerhalb der Blöcke (6) enden,
**dadurch gekennzeichnet, dass** jede der umgekehrt geneigten Seitenrillen (8) gebogene Abschnitte (10a, 10b) innerhalb von Blöcken (6) aufweist, sodass ein Neigungswinkel relativ zur Laufflächenbreitenrichtung dieser Abschnitte der umgekehrt geneigten Seitenrille (8), welche sich von den gebogenen Abschnitten (10a, 10b) bis zu den Enden (9a, 9b) erstrecken, kleiner als ein Neigungswinkel relativ zur Laufflächenbreitenrichtung eines mittleren Abschnitts der umgekehrt geneigten Seitenrille (8) ist.

2. Luftreifen nach Anspruch 1, wobei der Mittelpunkt in der Laufflächenbreitenrichtung jeder der umgekehrt geneigten Seitenrillen (8) auf einer Umfangslinie durch den Mittelpunkt in der Laufflächenbreitenrichtung jedes Blocks (6) angeordnet ist, in dem die umgekehrt geneigte Seitenrille (8) bereitgestellt ist.

3. Luftreifen nach Anspruch 1 oder 2, wobei der Neigungswinkel des mittleren Abschnitts der umgekehrt geneigten Seitenrille (8) relativ zu der Laufflächenbreitenrichtung im Bereich zwischen 30° und 70° liegt.

4. Luftreifen nach einem der Ansprüche 1 bis 3, wobei ein Neigungswinkel jeder der Seitenrillen (4) relativ zur Laufflächenbreitenrichtung in Laufflächenschulterbereichen kleiner ist als in einem Laufflächenmittenbereich.

5. Luftreifen nach einem der Ansprüche 1 bis 4, wobei in der Oberfläche (1) der Lauffläche zwei Umfangsmittelrillen (2,3) vorgesehen sind.

6. Luftreifen nach einem der Ansprüche 1 bis 5, wobei jede der umgekehrt geneigten Seitenrillen (8) gebogene Abschnitte (10a, 10b) in Blöcken (6) aufweist, sodass eine Rillenbreite dieser Abschnitte der umgekehrt geneigten Seitenrille (8), welche sich von den gebogenen Abschnitten (10a, 10b) bis zu den Enden (9a, 9b) erstrecken, kleiner als die Rillenbreite eines mittleren Abschnitts der umgekehrt geneigten Seitenrille (8) ist.

## Revendications

1. Bandage pneumatique comprenant : une bande de roulement comportant une surface de bande de roulement (1) ; au moins une rainure circonférentielle principale (2, 3) s'étendant de manière circonférentielle autour de la bande de roulement ; et plusieurs rainures latérales (4) s'étendant à un angle par rapport à une direction de la largeur de la bande de roulement, la surface de la bande de roulement (1) étant séparée en plusieurs pavés (6, 7), par la rainure circonférentielle principale (2, 3) et les rainures latérales (4), chacun des pavés (6, 7) comportant une ou plusieurs lamelles ;
dans lequel le bandage pneumatique comprend plusieurs rainures latérales à inclinaison inverse (8), s'étendant chacune, à travers au moins deux pavés (6), dans une direction opposée à la direction d'inclinaison des rainures latérales (4) par rapport à la direction de la largeur de la bande de roulement ; et
dans lequel les extrémités (9a, 9b) de chacune des rainures latérales à inclinaison inverse (8) se terminent toutes les deux dans les pavés (6).
**caractérisé en ce que** chacune des rainures latérales à inclinaison inverse (8) comporte des parties fléchies (10a, 10b) dans des pavés (6), de sorte qu'un angle d'inclinaison par rapport à la direction de la largeur de la bande de roulement de ces parties de la rainure latérale à inclinaison inverse (8) s'étendant des parties fléchies (10a, 10b) vers les extrémités (9a, 9b) est inférieur à un angle d'inclinaison par rapport à la direction de la largeur de la bande de roulement d'une partie centrale de la rainure latérale à inclinaison inverse (8).

2. Bandage pneumatique selon la revendication 1, dans lequel le centre, dans la direction de la largeur de la bande de roulement, de chacune des rainures latérales à inclinaison inverse (8) est situé sur une ligne circonférentielle traversant le centre, dans la direction de la largeur de la bande de roulement, de chaque pavé (6) dans lequel la rainure latérale à inclinaison inverse (8) est formée.

3. Bandage pneumatique selon les revendications 1 ou 2, dans lequel l'angle d'inclinaison de la partie centrale de la rainure latérale à inclinaison inverse (8) par rapport à la direction de la largeur de la bande de roulement est compris dans l'intervalle allant de 30° à 70°.

4. Bandage pneumatique selon l'une quelconque des revendications 1 à 3, dans lequel un angle d'inclinaison de chacune des rainures latérales (4) par rapport à la direction de la largeur de la bande de roulement est, dans des régions d'épaulement de la bande de roulement, inférieur à celui dans la région centrale de la bande de roulement.

5. Bandage pneumatique selon l'une quelconque des revendications 1 à 4, dans lequel deux rainures circonférentielles principales (2, 3) sont formées dans la surface de la bande de roulement (1).

6. Bandage pneumatique selon l'une quelconque des revendications 1 à 5, dans lequel chacune des rainures latérales à inclinaison inverse (8) comporte des parties fléchies (10a, 10b) dans des pavés (6), de sorte qu'une largeur de rainure de ces parties de la rainure latérale à inclinaison inverse (8), s'étendant des parties fléchies (10a, 10b) vers les extrémités (9a, 9b), est inférieure à une largeur de rainure d'une partie centrale de la rainure latérale à inclinaison inverse (8).
